# EUROPÄISCHE PATENTSCHRIFT

(11) **EP 1 110 819 B1**
(45) Veröffentlichungstag und Bekanntmachung des Hinweises auf die Patenterteilung: **11.06.2003**
(21) Anmeldenummer: 00127898.5
(22) Anmeldetag: 20.12.2000
(51) Int. Cl.: B60R 1/072

(54) **Elektrisch verstellbarer Aussenrückspiegel**
Electrically adjustable exterior rear view mirror
Rétroviseur extérieur ajustable électriquement

(30) Priorität: 22.12.1999 DE 19962469
(43) Veröffentlichungstag der Anmeldung: 27.06.2001
(73) Patentinhaber: Donnelly Hohe GmbH & Co. KG, 97903 Collenberg (DE)
(72) Erfinder: Kaspar, Rudolf, 97903 Collenberg (DE); Polzer, Herwig, 63897 Miltenberg (DE)
(74) Vertreter: Böck, Bernhard, Dipl.-Ing.

(56) Entgegenhaltungen:
- EP-A- 0 340 606
- DE-A- 2 810 888
- DE-A- 3 120 627

## Beschreibung

Die Erfindung betrifft einen elektrisch verstellbaren Außenrückspiegel nach dem Oberbegriff des Patentanspruchs 1. Weiter betrifft die Erfindung ein Antriebsmodul zur Verwendung in einem erfindungsgemäßen Außenrückspiegel mit den Merkmalen des Anspruchs 7.

Elektrisch verstellbare Außenrückspiegel werden im Kraftfahrzeugbau in einer Vielzahl von Konstruktionsvarianten verwandt. Um dem Fahrer abhängig von der jeweiligen Sitzposition und Körpergröße die optimale Einstellung des Blickwinkels zu ermöglichen, weisen die gattungsgemäßen Außenrückspiegel eine verstellbar gelagerte Glasbaugruppe auf, die angetrieben von zumindest einem elektrischen Antriebsmotor und einem zwischen der Glasbaugruppe und dem Antriebsmotor vorgesehenen Verstellgetriebe ferngesteuert eingestellt werden kann. Um eine optimale Einstellung ermöglichen zu können, ist die Glasbaugruppe dabei zumeist gegenüber zwei Schwenkachsen verstellbar gelagert, so dass innerhalb eines bestimmten Stellbereichs jeder Blickwinkel einstellbar ist. Um die Stellbewegungen gegenüber den beiden Schwenkachsen unabhängig voneinander ausführen zu können, sind deshalb in der Regel zwei Antriebsstränge mit jeweils einem Antriebsmotor vorgesehen.

Die Umsetzung der rotatorischen Stellbewegung des Antriebsmotors in die gewünschte Kippbewegung der Glasbaugruppe wird in den bekannten Verstellgetrieben durch Zahnstangen, Gewindespindeln, Verzahnungen in den Kulissen, oder ähnlichen Bauteilen bewirkt. Gemeinsam ist den bekannten Verstellgetrieben in Außenrückspiegeln, dass sie eine Stellbewegung zwischen zwei Endanschlägen bewirken. Die Endanschläge bestimmen dabei den maximalen Stellbereich, innerhalb dessen die Glasbaugruppe verschwenkt werden kann.

Aus der EP 0 340 606 A ist ein Außenrückspiegel mit einer verstellbar gelagerten Glasbaugruppe und nur einem elektrischen Antriebsmotor bekannt. Die vom Antriebsmotor ausgehende Stellbewegung wird über zwei Verstellgetriebe verteilt, um die Glasbaugruppe gegenüber zwei unterschiedlichen Schwenkachsen verstellen zu können.

Aus der DE 28 10 888 A , die einen Außenrückspiegel nach dem Oberbegriff des Anspruchs 1 bzw. ein Antriebsmodul nach dem Oberbegriff des Anspruchs 7 beschreibt, ist ein weitere Außenrückspiegel mit einer verstellbar gelagerten Glasbaugruppe und nur einem elektrischen Antriebsmotor bekannt. Dabei ist im Antriebsstrang ein Verteilergetriebe vorgesehen, mit dem abhängig von der Drehrichtung des Antriebsmotors die Stellbewegung auf zwei verschiedene Verstellgetriebe, die unterschiedlichen Schwenkachsen zugeordnet sind, verteilt werden kann.

Nachteilig an den bekannten Antriebskonzepten für Außenrückspiegel ist es, dass diese relativ hohe Herstellungskosten verursachen.

Aufgabe der vorliegenden Erfindung ist es, einen Außenrückspiegel bzw. ein Antriebsmodul zur Verwendung in einem Außenrückspiegel vorzuschlagen, durch deren Verwendung Herstellungskosten eingespart werden können.

Diese Aufgabe wird durch einen Außenrückspiegel nach der Lehre des Patentanspruchs 1 bzw. durch ein Antriebsmodul nach der Lehre des Patentanspruchs 7 gelöst.

Bevorzugte Ausführungsformen der Erfindung sind Gegenstand der Unteransprüche.

Eine erfindungsgemäß besonders einfache Anordnung ergibt sich, wenn das Verteilergetriebe ein vom Antriebsmotor antreibbares Antriebsrad aufweist, das mit zwei an den Antriebswellen der Verstellgetriebe angeordneten Friktionsrädern kraftschlüssig in Eingriff bringbar ist. Die Drehachse des Antriebsrades und die Drehachsen der beiden Antriebswellen müssen dabei im wesentlichen parallel zueinander verlaufen. Um zu gewährleisten, dass die Stellbewegung des Antriebsmotors abhängig von dessen Drehrichtung im Wesentlichen jeweils nur eine der Antriebswellen übertragen wird, sind die Antriebswellen im Bereich der Friktionsräder in Langlöchern zu lagern. Die Langlöcher müssen dabei zusammen eine unvollständig V-förmige Anordnung ergeben, die einen veränderbaren Achsabstand zwischen der Drehachse des Antriebsrades und den Antriebswellen im Bereich der Friktionsräder ermöglichen. Wird das Antriebsrad dann durch den Antriebsmotor angetrieben, wirken auf beide Friktionsräder tangential gerichtete Reibungskräfte, die jeweils in der Kontaktfläche zwischen den Friktionsrädern und dem Antriebsrad übertragen werden. Da die Friktionsräder auf gegenüberliegenden Seiten des Antriebsrades mit dem Antriebsrad in Eingriff gebracht werden, wirken die Reibungskräfte an den beiden Friktionsrädern in entgegengesetzte Richtung. Daraus folgt, dass die Antriebswellen durch die an den Friktionsrädern angreifenden Reibungskräfte in entgegengesetzte Richtungen gedrückt werden, wobei dadurch die eine Antriebswelle in dem schräg verlaufenden Langloch radial in Richtung des Antriebsrades gedrückt wird. Die andere Antriebswelle wird wegen der V-förmigen Anordnung der Langlöcher dagegen radial nach außen gedrückt. Durch die Bewegung der Antriebswellen in den Langlöchern verändert sich der Achsabstand zwischen den Antriebswellen und der Drehachse des Antriebsrades zumindest geringfügig, wobei der eine Achsabstand vergrößert und der andere Achsabstand verkleinert wird. Durch die Verringerung des Achsenabstandes an der einen Antriebswelle erhöht sich die Reibung an dem zugehörigen Friktionsrad und ermöglicht eine kraftschlüssige Übertragung der Stellbewegung des Antriebsrades auf dieses Friktionsrad. Das gegenüberliegende Friktionsrad vergrößert den Achsabstand und bleibt deshalb im Ruhezustand, da die vom Antriebsrad auf das Friktionsrad übertragende Reibungskraft nicht ausreicht, um den sonstigen Reibungswiderstand zu überwinden.

Der Öffnungswinkel α der V-förmigen Anordnung der Langlöcher sollte vorzugsweise im Bereich von 20° bis 40° liegen. Das heißt, die Langlöcher sollten vorzugsweise mit einem Winkel α/2 von ca. 10° bis 20° zur Senkrechten angeordnet sein, wobei die Bezugssenkrechte durch ein Lot auf die Verbindungslinie der Drehachsen bestimmt wird. Selbstverständlich sind aber auch anderer Öffnungswinkel α denkbar.

Um die Laufruhe des Verteilergetriebes bei relativ geringem Verschleiß zu erhöhen, ist es vorteilhaft, wenn die Laufflächen des Antriebsrades und/oder der Friktionsräder aus einem elastischen Material, beispielsweise Gummi, hergestellt sind. So kann beispielsweise auf einen Grundkörper aus Kunststoff eine Elastomer-Lauffläche aufgespritzt werden.

Gattungsgemäß weist das verwendete Verstellgetriebe eine Antriebswelle mit einem exzentrisch ausgebildeten Wellenabschnitt und eine Antriebsstange, die zwischen der Glasbaugruppe und dem exzentrisch ausgebildeten Wellenabschnitt der Antriebswelle angeordnet ist, auf. Die Antriebswelle und die Antriebsstange wirken dabei in der Art zusammen, dass eine rotatorische Stellbewegung der Antriebswelle durch Auslenkung des exzentrisch ausgebildeten Wellenabschnitts in eine lineare Stellbewegung der Antriebsstange umgesetzt wird. Durch die lineare Stellbewegung der Antriebsstange kann dann die gewünschte Kippbewegung der Glasbaugruppe bewirkt werden. Abhängig von der Gestaltung des exzentrischen Wellenabschnitts ergeben sich für die lineare Stellbewegung der Antriebsstange ein unterer und ein oberer Totpunkt, durch die die Grenzen des Stellbereichs, innerhalb dem die Glasbaugruppe verstellt werden kann, bestimmt werden. Wird die Glasbaugruppe durch ferngesteuerten Antrieb des Antriebsmotors verstellt und erreicht durch Anfahren eines der Totpunkte eine Grenze des Schwenkbereichs, so bewirkt eine zusätzliche Stellbewegung des Antriebsmotors kein Anfahren gegen einen Endanschlag, sondern lediglich das Überfahren des Totpunktes, wobei die Kippbewegung der Glasbaugruppe nach Überfahren des Totpunktes in entgegengesetzter Bewegungsrichtung fortgesetzt wird.

Im Ergebnis kann durch eine derartige Gestaltung des Verstellgetriebes erreicht werden, dass bei permanentem Antrieb des Antriebsmotors in eine Drehrichtung der gesamte Stellbereich in einer Verstellebene, innerhalb dem die Glasbaugruppe verschwenkt werden kann, rollierend überfahren wird. Eine 360°-Drehung der Antriebswelle bewirkt ein zweimaliges Durchlaufen des gesamten Stellbereichs. Eine mechanische Begrenzung des Stellbereichs ist nicht gegeben, so dass Sicherungsmaßnahmen, wie beispielsweise Rutschkupplungen, entfallen können.

Eine Möglichkeit zur Ausbildung des Verstellgetriebes ist es, die Antriebswelle in der Art einer Kurbelwelle zu gestalten, an deren Abtriebsseite eine Antriebskurbel vorgesehen ist. Das eine Ende der Antriebsstange wird dabei drehbar an der Antriebskurbel gelagert. Der obere und der untere Totpunkt bei dieser Anordnung ergeben sich daraus, wenn die Antriebskurbel mit der Antriebsstange in einer Linie steht.

Alternativ dazu ist es auch denkbar, die Antriebswelle in der Art einer Nockenwelle auszubilden, auf deren Abtriebsseite zumindest ein Antriebsnocken angeordnet ist. Ein Ende der Antriebsstange wird dabei auf dem Antriebsnocken zur Anlage gebracht und durch eine Vorspanneinrichtung gegen den Antriebsnocken gedrückt. Wird die Antriebswelle angetrieben, drückt der Antriebsnocken abhängig von der relativen Position zwischen Antriebsnocken und Antriebsstange die Antriebsstange immer weiter nach außen, bis der höchste Punkt des Antriebsnocken erreicht ist. Wird die Drehbewegung der Antriebswelle in die gleiche Drehrichtung fortgesetzt, durchläuft die Antriebswelle den oberen Totpunkt der Antriebsstange, die anschließend durch die Vorspanneinrichtung wieder nach innen gedrückt wird.

Da bei den erfindungsgemäßen Außenrückspiegeln der gesamte Stellbereich rollierend überfahren werden kann, ist es in manchen Anwendungsfällen ausreichend, den Antriebsmotor zur Einstellung der Glasbaugruppe nur in eine Drehrichtung anzutreiben.

Aus dem Stand der Technik sind Antriebsmodule für elektrische Außenrückspiegel bekannt, die komplett vormontiert sind und als Einheit im Außenrückspiegel befestigt werden können. Die Glasbaugruppe wird dann zuletzt auf einer elektrisch verstellbaren Halteplatte des Antriebsmoduls befestigt. Auch für den Einsatz in erfindungsgemäßen Außenrückspiegeln mit lediglich einem Antriebsmotor zur Ansteuerung von zwei getrennten Verstellgetrieben unter Verwendung eines Verteilergetriebes können derartige vormontierte Antriebsmodule zur Verfügung gestellt werden.

Nachfolgend wird die Erfindung anhand lediglich bevorzugte Ausführungsformen darstellender Zeichnungen näher erläutert. Es zeigt:
- **Fig. 1**: ein schematisch dargestelltes Antriebsmodul in Ansicht von oben;
- **Fig. 2**: das Antriebsmodul gemäß **Fig. 1** in einer ersten seitlichen Ansicht;
- **Fig. 3**: das Antriebsmodul gemäß **Fig. 1** in einer zweiten seitlichen Ansicht.

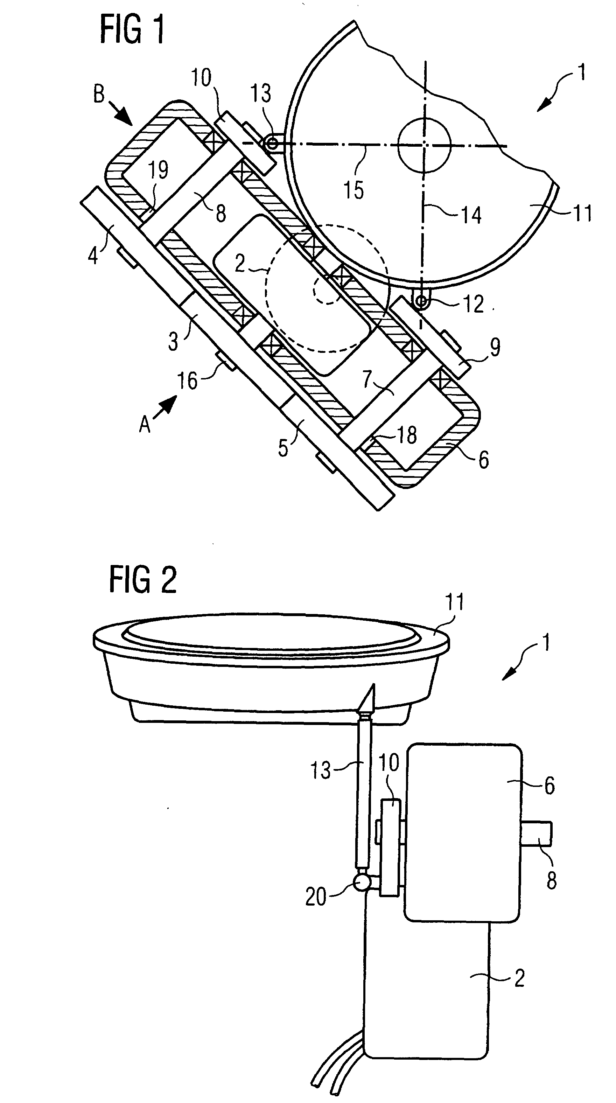

**Fig. 1** zeigt ein Antriebsmodul 1 zur Verwendung in einem elektrisch verstellbaren Außenrückspiegel in Ansicht von oben. Zur Erhöhung der Erkennbarkeit sind alle nicht für das Verständnis der Erfindung erforderlichen Bauteile zeichnerisch nicht dargestellt. Das Antriebsmodul 1 weist einen Antriebsmotor 2, ein Antriebsrad 3, zwei Friktionsräder 4 und 5, einen Rahmen 6, zwei als Antriebswellen dienende Kurbelwellen 7 und 8 mit zugeordneten Antriebskurbeln 9 und 10, und eine verstellbar gelagerte Halteplatte 11, auf der die Glasbaugruppe befestigbar ist, auf. Die Antriebskurbeln 9 und 10 sind jeweils über eine Antriebsstange 12 und 13 mit der Halteplatte 11 gekoppelt.

Die Halteplatte 11 ist um die Schwenkachsen 14 und 15 schwenkbar gelagert, wobei die dafür erforderlichen Bauelemente nicht zeichnerisch dargestellt sind. Eine Drehung der Antriebswelle 8 um einen bestimmten Winkelbetrag bewirkt eine Auslenkung der Antriebskurbel 10, so dass die Antriebsstange 13 senkrecht zur Bildebene verschoben wird und dadurch eine Schwenkbewegung der Halteplatte 11 um die Schwenkachse 14 bewirkt. Analog dazu kann durch eine Drehung der Antriebsachse 7 und der damit verbundenen Verstellung der Antriebskurbel 9 und der Antriebsstange 12 eine Schwenkbewegung der Halteplatte 11 um die Schwenkachse 15 bewirkt werden. Dabei ist die Stellbewegung der Antriebsachsen 8 und 7 nicht durch Endanschläge begrenzt, vielmehr kann durch fortlaufenden Antrieb der Antriebsachsen 7 oder 8 der Stellbereich der Halteplatte 11 rollierend überfahren werden. Die Stellbewegung der Antriebsachsen 7 und 8 wird durch Antrieb des Antriebsmotors 2 bewirkt, der über eine Welle 16 das Antriebsrad 3 antreibt. Das Antriebsrad 3 seinerseits kann auf die Friktionsräder 4 und 5 Reibungskräfte übertragen, um dadurch die Antriebsachsen 7 und 8 anzutreiben. Die Antriebsachsen 7 und 8 sind im Bereich der Friktionsräder 4 und 5 in im Schnitt dargestellten Langlöchern 18 und 19 gelagert, so dass die Friktionsräder 4 bzw. 5 abhängig von der Drehrichtung des Antriebsrades 3 nach außen ausweichen können und dadurch in Abhängigkeit von der Drehrichtung des Antriebsrades 3 jeweils nur eine der Antriebsachsen 7 oder 8 angetrieben wird.

**Fig. 2** zeigt das Antriebsmodul 1 in der Seitenansicht B. Man erkennt die Halteplatte 11 in perspektivischer Ansicht, auf deren Oberseite eine Glasbaugruppe befestigbar ist. Weiter erkennt man den Antriebsmotor 2, den Rahmen 6, die Antriebswelle 8, die Antriebskurbel 10 und die Antriebsstange 13. Das Friktionsrad 4 ist in **Fig. 2** nicht dargestellt. In der dargestellten Ansicht befindet sich die Antriebskurbel 10 im unteren Totpunkt, so dass die Antriebsstange 13 sich im tiefsten Punkt befindet und die Halteplatte 11 demgemäß maximal seitlich abgekippt ist. Die Antriebsstange 13 ist mittels eines Kugelgelenks 20 mit der Antriebskurbel 10 verbunden, so dass der obere und der untere Totpunkt der Antriebskurbel 10 überfahren werden kann. Die Lagerung der Antriebsstange 13 in der Halteplatte 11 erlaubt eine leichte Pendelbewegung der Antriebsstange 13, da diese beim Umlauf der Antriebskurbel 10 auch aus der Senkrechten heraus ausgelenkt wird.

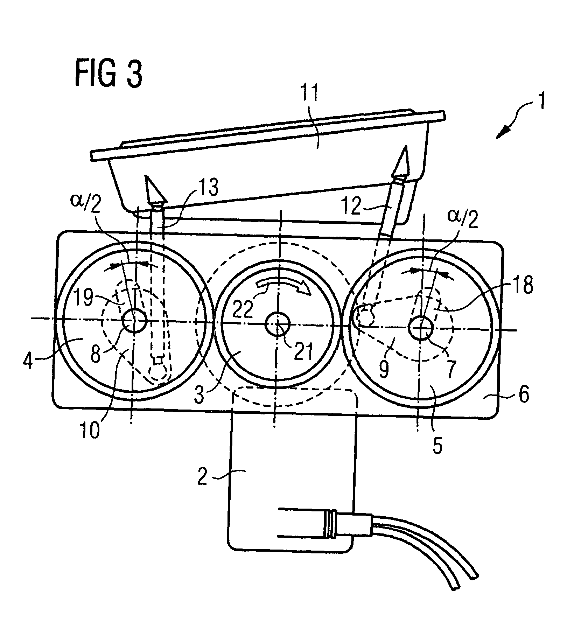

**Fig. 3** zeigt das Antriebsmodul 1 in der Seitenansicht B. Die Langlöcher 18 und 19 verlaufen unter einem Winkel α/2 zur Senkrechten schräg nach unten, so dass sich daraus insgesamt ein Öffnungswinkel α der von den Langlöchern 18 und 19 gebildeten V-förmigen Anordnung ergibt. Man erkennt, dass das Antriebsrad 3 in der dargestellten Ruhestellung mit beiden Friktionsrädern 4 und 5 in gleicher Weise in Kontakt steht. Das heißt der Achsabstand zwischen der Drehachse 21 der Welle 16 und den Drehachsen der Antriebswellen 7 und 8 ist genau gleich. Wird nun das Antriebsrad 3 in Richtung des Bewegungspfeils 22 angetrieben, wird das Friktionsrad 5 durch die in der Kontaktfläche tangential nach unten gerichtete Reibungskraft nach unten gedrückt, so dass die Antriebswelle 7 an das untere Ende des Langlochs 18 angelegt wird. Bei dem sich daraus ergebenden Achsabstand zwischen der Drehachse 21 der Welle 16 und der Antriebswelle 7 können Reibungskräfte zwischen dem Antriebsrad 3 und dem Friktionsrad 5 übertragen werden, die zum Antrieb der Antriebsstange 12 ausreichen.

Im Gegensatz dazu wird beim Antrieb des Antriebsrades 3 in Richtung des Bewegungspfeils 22 das Friktionsrad 4 im Langloch 19 schräg nach oben gedrückt, so dass sich im Ergebnis der Achsabstand zwischen der Antriebswelle 8 und der Drehachse 21 der Welle 16 vergrößert. Durch den vergrößerten Achsabstand nimmt die Reibungskraft in der Kontaktfläche zwischen dem Antriebsrad 3 und dem Friktionsrad 4 ab, so dass im Ergebnis keine Stellbewegung auf die Antriebsstange 13 übertragen werden kann.

Umgekehrt wird beim Antrieb des Antriebsrades 3 entgegen dem Bewegungspfeil 22 ein Antrieb der Antriebsstange 13 bewirkt, wohingegen in diesem Fall ein Antrieb der Antriebsstange 12 nicht erfolgt. Im Ergebnis kann also durch die schräg verlaufende Anordnung der beiden Langlöcher 18 und 19, die zusammen eine unvollständig V-förmige Anordnung ergeben, bewirkt werden, dass abhängig von der Drehrichtung des Antriebsrades 3 jeweils nur eines der Friktionsräder 4 oder 5 angetrieben wird.

## Patentansprüche

1. Außenrückspiegel mit einer verstellbar gelagerten Glasbaugruppe und einem elektrischen Antriebsmotor (2), wobei der Außenrückspiegel zwei Verstellgetriebe (7, 9, 12 / 8, 10, 13), mit denen die Glasbaugruppe gegenüber zwei unterschiedlichen Schwenkachsen (14, 15) verstellbar ist, und nur einen Antriebsmotor (2), mit dem beide Verstellgetriebe (7, 9, 12 / 8, 10, 13) antreibbar sind, aufweist, und wobei die Verstellgetriebe jeweils eine Antriebswelle (7, 8) mit einem exzentrisch ausgebildeten Wellenabschnitt (9, 10) und eine Antriebsstange (12, 13), die zwischen der Glasbaugruppe und dem exzentrisch ausgebildeten Wellenabschnitt (9, 10) der Antriebswelle (7, 8) angeordnet ist, aufweist, und wobei die Antriebswelle (7, 8) mit der Antriebsstange in der Art zusammenwirkt, dass eine rotatorische Stellbewegung der Antriebswelle (7, 8) durch Auslenkung des exzentrisch ausgebildeten Wellenabschnitts (9, 10) in eine linear auf die Glasbaugruppe wirkende Stellbewegung der Antriebsstange (12, 13) umgesetzt wird, und wobei zwischen dem Antriebsmotor einerseits und den beiden Verstellgetrieben anderseits ein Verteilergetriebe angeordnet ist,
**dadurch gekennzeichnet,**
**dass** das Verteilergetriebe ein vom Antriebsmotor (2) antreibbares Antriebsrad (3) aufweist, das mit zwei an den Antriebswellen (7, 8) der Verstellgetriebe (7, 9, 12 / 8, 10, 13) angeordneten Friktionsrädern (4, 5) kraftschlüssig in Eingriff bringbar ist, wobei die Drehachsen (16) des Antriebsrades (3) und der beiden Antriebswellen (7, 8) im Wesentlichen zueinander parallel verlaufen und wobei die Antriebswellen (7, 8) im Bereich der Friktionsräder (4, 5) in schräg verlaufenden Langlöchern (18, 19), die zusammen eine unvollständig V-förmige Anordnung ergeben und dadurch einen veränderbaren Achsabstand zwischen der Drehachse (16) des Antriebsrades (3) und den Antriebswellen (7, 8) im Bereich der Friktionsräder (4, 5) ermöglichen, gelagert sind.

2. Außenrückspiegel nach Anspruch 1,
**dadurch gekennzeichnet,**
**dass** die Antriebswelle (7, 8) in der Art einer Kurbelwelle ausgebildet ist, an deren Abtriebsseite eine Antriebskurbel (9, 10) vorgesehen ist, wobei die Antriebsstange (12, 13) an der Antriebskurbel (9, 10) drehbar gelagert ist.

3. Außenrückspiegel nach Anspruch 1,
**dadurch gekennzeichnet,**
**dass** die Antriebswelle in der Art einer Nockenwelle ausgebildet ist, auf deren Abtriebsseite zumindest ein Antriebsnocken angeordnet ist, wobei ein Ende der Antriebsstange auf dem Antriebsnocken zur Anlage bringbar ist und durch eine Vorspanneinrichtung gegen den Antriebsnocken gedrückt wird.

4. Außenrückspiegel nach einem der Ansprüche 1 bis 3,
**dadurch gekennzeichnet,**
**dass** der Antriebsmotor zur Einstellung der Glasbaugruppe nur in eine Drehrichtung betrieben werden muss.

5. Außenrückspiegel nach Anspruch 1,
**dadurch gekennzeichnet,**
**dass** der Öffnungswinkel α der V-förmigen Anordnung der Langlöcher (18, 19) im Bereich von 20° bis 40° liegt.

6. Außenrückspiegel nach einem der Ansprüche 1 bis 5,
**dadurch gekennzeichnet,**
**dass** die Laufflächen des Antriebsrades (3) und/oder der Friktionsräder (4, 5) aus einem elastischen Material hergestellt sind.

7. Antriebsmodul (1) mit einem elektrischen Antriebsmotor (2) und zwei Verstellgetrieben (7, 9, 12 / 8, 10, 13), mit denen eine Glasbaugruppe gegenüber zwei unterschiedlichen Schwenkachsen (14, 15) verstellt werden kann, und nur einem Antriebsmotor (2), mit dem beide Verstellgetriebe (7, 9, 12 / 8, 10, 13) antreibbar sind, wobei die Verstellgetriebe jeweils eine Antriebswelle (7, 8) mit einem exzentrisch ausgebildeten Wellenabschnitt (9, 10) und eine Antriebsstange (12, 13), die zwischen der Glasbaugruppe und dem exzentrisch ausgebildeten Wellenabschnitt (9, 10) der Antriebswelle (7, 8) angeordnet ist, aufweisen, und wobei die Antriebswelle (7, 8) mit der Antriebsstange in der Art zusammenwirkt, dass eine rotatorische Stellbewegung der Antriebswelle (7, 8) durch Auslenkung des exzentrisch ausgebildeten Wellenabschnitts (9, 10) in eine linear auf die Glasbaugruppe wirkende Stellbewegung der Antriebsstange (12, 13) umgesetzt wird, und wobei zwischen dem Antriebsmotor einerseits und den beiden Verstellgetrieben anderseits ein Verteilergetriebe angeordnet ist,
**dadurch gekennzeichnet,**
**dass** das Verteilergetriebe ein vom Antriebsmotor (2) antreibbares Antriebsrad (3) aufweist, das mit zwei an den Antriebswellen (7, 8) der Verstellgetriebe (7, 9, 12 / 8, 10, 13) angeordneten Friktionsrädern (4, 5) kraftschlüssig in Eingriff bringbar ist, wobei die Drehachsen (16) des Antriebsrades (3) und der beiden Antriebswellen (7, 8) im Wesentlichen zueinander parallel verlaufen und wobei die Antriebswellen (7, 8) im Bereich der Friktionsräder (4, 5) in schräg verlaufenden Langlöchern (18, 19), die zusammen eine unvollständig V-förmige Anordnung ergeben und dadurch einen veränderbaren Achsabstand zwischen der Drehachse (16) des Antriebsrades (3) und den Antriebswellen (7, 8) im Bereich der Friktionsräder (4, 5) ermöglichen, gelagert sind.

## Claims

1. An exterior rear-view mirror comprising an adjustably held glass subassembly and one electrical drive motor (2), wherein the exterior rear-view mirror comprises two adjustment mechanisms (7, 9, 12 / 8, 10, 13) with which the glass subassembly is adjustable relative to two different swivel axes (14, 15), and comprises only one drive motor (2) with which both adjustment mechanisms (7, 9, 12 / 8, 10, 13) can be driven, and wherein each of the adjustment mechanisms comprises a drive shaft (7, 8) comprising an eccentrically shaped shaft section (9, 10) and a drive bar (12, 13) arranged between the glass subassembly and the eccentrically shaped shaft section (9, 10) of the drive shaft (7, 8), and wherein the drive shaft (7, 8) and the drive bar interact in such a way that a rotatory actuating movement of the drive shaft (7, 8) is converted to a linear actuating movement of the drive bar (12, 13), said actuating movement acting on the glass subassembly, as a result of excursion of the eccentrically shaped shaft section (9, 10), and wherein a power takeoff mechanism is arranged between the drive motor on the one hand and the two adjustment mechanisms on the other hand,
**characterised in that**
the power takeoff mechanism comprises a drive wheel (3) drivable by the drive motor (2), with said drive wheel (3) being able to be engaged in a non-positive way by means of two friction wheels (4, 5) arranged on the drive shafts (7, 8) of the adjustment mechanisms (7, 9, 12 / 8, 10, 13), wherein the axes of rotation (16) of the drive wheel (3) and of the two drive shafts (7, 8) are essentially aligned parallel to each other, and wherein the drive shafts (7, 8) in the region of the friction wheels (4, 5) are held in diagonally arranged elongated holes (18, 19) which together form an incomplete V-shaped arrangement which makes it possible for the axis spacing between the axis of rotation (16) of the drive wheel (3) and the drive shafts (7, 8) in the area of the friction wheels (4, 5) to be variable.

2. The exterior rear-view mirror according to claim 1,
**characterised in that**
the drive shaft (7, 8) is configured in the manner of a crankshaft, with a driving crank (9, 10) being provided at the driven side of said crankshaft (7, 8), with the drive bar (12, 13) being rotatably held at the driving crank (9, 10).

3. The exterior rear-view mirror according to claim 1,
**characterised in that**
the drive shaft is shaped in the manner of a camshaft, with at least one actuating cam being arranged on the driven side of said camshaft, with one end of the drive bar being able to be made to rest against the actuating cam and being pushed against said actuating cam by means of a pretension device.

4. The exterior rear-view mirror according to any one of claims 1 to 3,
**characterised in that**
the drive motor for adjusting the glass subassembly only needs to be operated in one direction of rotation.

5. The exterior rear-view mirror according to claim 1,
**characterised in that**
the dihedral angle α of the V-shaped arrangement of the elongated holes (18, 19) is between 20° and 40°.

6. The exterior rear-view mirror according to any one of claims 1 to 5,
**characterised in that**
the running faces of the drive wheel (3) and/or of the friction wheels (4, 5) are made from an elastic material.

7. A drive module (1) comprising an electrical drive motor (2) and two adjustment mechanisms (7, 9, 12 / 8, 10, 13) with which a glass subassembly is adjustable relative to two different swivel axes (14, 15), and comprising only one drive motor (2) with which both adjustment mechanisms (7, 9, 12 / 8, 10, 13) can be driven, wherein each of the adjustment mechanisms comprises a drive shaft (7, 8) comprising an eccentrically shaped shaft section (9, 10) and a drive bar (12, 13) arranged between the glass subassembly and the eccentrically shaped shaft section (9, 10) of the drive shaft (7, 8), and wherein the drive shaft (7, 8) and the drive bar interact in such a way that a rotatory actuating movement of the drive shaft (7, 8) is converted to a linear actuating movement of the drive bar (12, 13), said actuating movement acting on the glass subassembly, as a result of excursion of the eccentrically shaped shaft section (9, 10), and wherein a power takeoff mechanism is arranged between the drive motor on the one hand and the two adjustment mechanisms on the other hand,
**characterised in that**
the power takeoff mechanism comprises a drive wheel (3) drivable by the drive motor (2), with said drive wheel (3) being able to be engaged in a non-positive way by means of two friction wheels (4, 5) arranged on the drive shafts (7, 8) of the adjustment mechanisms (7, 9, 12 / 8, 10, 13), wherein the axes of rotation (16) of the drive wheel (3) and of the two drive shafts (7, 8) are essentially aligned parallel to each other, and wherein the drive shafts (7, 8) in the region of the friction wheels (4, 5) are held in diagonally arranged elongated holes (18, 19) which together form an incomplete V-shaped arrangement which makes it possible for the axis spacing between the axis of rotation (16) of the drive wheel (3) and the drive shafts (7, 8) in the area of the friction wheels (4, 5) to be variable.

## Revendications

1. Rétroviseur extérieur pourvu d'un sous-ensemble à miroir orientable à paliers et d'un moteur d'entraînement électrique (2), le rétroviseur extérieur comportant deux mécanismes de réglage(7, 9, 12 / 8, 10, 13) par lesquels le sous-ensemble à miroir peut être orienté par rapport à deux axes de pivotement différents (14, 15), et présentant un seul moteur d'entraînement (2) par lequel les deux mécanismes de réglage (7, 9, 12 / 8, 10, 13) peuvent être entraînés, les mécanismes de réglage comprenant chacun un arbre moteur (7, 8) comportant une partie d'arbre excentrique (9, 10) et une tige d'entraînement (12, 13), qui est placée entre le sous-ensemble à miroir et la partie d'arbre excentrique (9, 10) de l'arbre moteur (7, 8), l'arbre moteur (7, 8) coopérant avec la tige d'entraînement de manière qu'un mouvement de réglage rotatif de l'arbre moteur (7, 8) est transformé par déviation de la partie d'arbre excentrique (9, 10) en un mouvement de réglage de la tige d'entraînement (12, 13) agissant linéairement sur le sous-ensemble à miroir, et un mécanisme répartiteur étant placé entre, d'une part, le moteur d'entraînement et, d'autre part, les deux mécanismes de réglage,
**caractérisé en ce que**
le mécanisme répartiteur comporte une roue motrice (3) qui peut être entraînée par le moteur d'entraînement (2), roue d'entraînement qui peut être mise en prise par adhérence avec deux roues de friction (4, 5) placées sur les arbres moteurs (7, 8) des mécanismes de réglage (7, 9, 12 / 8, 10, 13), les axes de rotation (16) de la roue d'entraînement (3) et des deux arbres moteurs (7, 8) étant essentiellement parallèles l'un à l'autre, et les arbres moteurs (7, 8) dans la zone des roues de friction (4, 5) tournant dans des trous allongés s'étendant obliquement (18, 19), qui forment ensemble un dispositif en V incomplet et permettent ainsi de changer l'entraxe entre l'axe de rotation (16) de la roue de commande (3) et les arbres moteurs (7, 8) dans la zone des roues de friction (4, 5).

2. Rétroviseur extérieur selon la revendication 1,
**caractérisé en ce que**
l'arbre moteur (7, 8) a la forme d'un vilebrequin, sur le côté de sortie duquel est prévue une manivelle de commande (9, 10), la tige d'entraînement (12, 13) étant montée de manière à pouvoir pivoter sur la manivelle de commande (9, 10).

3. Rétroviseur extérieur selon la revendication 1,
**caractérisé en ce que**
l'arbre moteur a la forme d'un arbre à cames, sur le côté de sortie duquel est placée au moins une came d'entraînement, une extrémité de la tige d'entraînement pouvant être appliquée sur la came d'entraînement et étant appuyée contre la came d'entraînement par un dispositif de précontrainte.

4. Rétroviseur extérieur selon l'une des revendications 1 à 3,
**caractérisé en ce que**
le moteur d'entraînement servant au réglage du sous-ensemble à miroir ne doit être actionné que dans un sens de rotation.

5. Rétroviseur extérieur selon la revendication 1,
**caractérisé en ce que**
l'angle d'ouverture α du dispositif en forme de V des trous allongés (18, 19) est compris entre 20° et 40°.

6. Rétroviseur extérieur selon l'une des revendications 1 à 5,
**caractérisé en ce que**
les surfaces de portée de la roue motrice (3) et/ou des roues de friction (4, 5) sont fabriquées dans un matériau élastique.

7. Module d'entraînement (1) comportant un moteur d'entraînement électrique (2) et deux mécanismes de réglage (7, 9, 12 / 8, 10, 13) par lesquels un sous-ensemble à miroir peut être orienté par rapport à deux axes de pivotement différents (14, 15), et un seul moteur d'entraînement (2) par lequel les deux mécanismes de réglage (7, 9, 12 / 8, 10, 13) peuvent être entraînés, les mécanismes de réglage comportant chacun un arbre moteur (7, 8) avec une partie d'arbre excentrique (9, 10) et une tige d'entraînement (12, 13), qui est placée entre le sous-ensemble à miroir et la partie d'arbre excentrique (9, 10) de l'arbre moteur (7, 8), et l'arbre moteur (7, 8) coopérant avec la tige d'entraînement de manière qu'un mouvement de réglage rotatif de l'arbre moteur (7, 8) est transformé par déviation de la partie d'arbre excentrique (9, 10) en un mouvement de réglage de la tige d'entraînement (12, 13) agissant linéairement sur le sous-ensemble à miroir, et un mécanisme répartiteur étant placé entre, d'une part, le moteur d'entraînement et, d'autre part, les deux mécanismes de réglage,
**caractérisé en ce que**
le mécanisme répartiteur comporte une roue motrice (3) qui peut être entraînée par le moteur d'entraînement (2), roue d'entraînement qui peut être mise en prise par adhérence avec deux roues de friction (4, 5) placées sur les arbres moteurs (7, 8) des mécanismes de réglage (7, 9, 12 / 8, 10, 13), les axes de rotation (16) de la roue d'entraînement (3) et des deux arbres moteurs (7, 8) étant essentiellement parallèles l'un à l'autre et les arbres moteurs (7, 8) dans la zone des roues de friction (4, 5) tournant dans des trous allongés s'étendant obliquement (18, 19), qui forment ensemble un dispositif en V incomplet et permettent ainsi de changer l'entraxe entre l'axe de rotation (16) de la roue de commande (3) et les arbres moteurs (7, 8) dans la zone des roues de friction (4, 5).
